# EUROPEAN PATENT APPLICATION

(11) **EP 1 463 253 A1**
(43) Date of publication of application: **29.09.2004**
(21) Application number: 03290760.2
(22) Date of filing: 26.03.2003
(51) Int. Cl.: H04L 27/00

(54) **System and method for carrier recovery whereby the carrier frequency is a multiple of the clock frequency**

(71) Applicant: ALCATEL, 75008 Paris (FR)
(72) Inventor: Milani, Renato, 23900 Lecco (IT); Verbana, Gianfranco, 20059 Vimercate (Milano) (IT); Spalvieri, Arnaldo, 60019 Senigallia (IT); Albanese, Matteo, 28100 Novara (IT); Rinaldi, Ivan, 23035 Sondalo (Sondrio) (IT)
(74) Representative: Sciaux, Edmond

(57) **Abstract**

Method and system for frequency synchronization in an optical telecommunication system, preferably in a free space optics (FSO) system, wherein a carrier signal is generated at the transmitter side by means of a modulator used for modulating the information bearing signal such that the frequency of said carrier signal (44) is derived from the clock frequency (23) of the information bearing signal itself, or a multiple thereof; and wherein at the receiver side the received information bearing signal is demodulated by a demodulator by multiplying it by the carrier signal in such a way that the frequency of carrier signal is derived from the clock frequency of the information bearing signal recovered at the demodulator itself or a multiple thereof.

## Description

The present invention relates generally to electronic communications systems. More specifically, the present invention relates to data communication systems, which transmit and receive information signals that are carried by digital modulation of laser light beams. Still more in particular, the present invention relates to a technique where the sequence of digital base-band symbols that carries the information is modulated at the transmit side by means of a carrier whose frequency is suitably related to the frequency of the digital base-band symbols, and is demodulated at the receive side without the need of estimation of the carrier frequency.

### BACKGROUND OF THE INVENTION

The free space optics (FSO) telecommunication systems are known for transmitting a light signal through the air. The operation of such optical systems transmitting a modulated light signal is basically based on one or more lasers coupled to one or more lens(es) at the transmission side, and one or more lens(es) for focusing the received laser beam on the detecting area of the receiver, at the receiver side.

In free space optical communication systems interference may occur that affects the spectrum of the signal bearing information at low frequency. Hence it is occasionally preferable to transmit an information-bearing signal which is substantially D.C. free. In this way, the interference can be suppressed at the receiver side by a high-pass filter or by a band-pass filter, without affecting the desired signal.

The present invention relates to a transmission method where the D.C. free signal is obtained by multiplying the sequence of base-band digital symbols by a carrier having a suitably generated frequency. The conventional prior art solutions are based on a carrier which is generated at the transmitter side by a free running oscillator. At the receiver side the frequency and the phase of the carrier are estimated and used in a conventional synchronous demodulation scheme. Besides, at the receiver side, the time interval between two successive digital base-band symbols should be estimated by a clock recovery algorithm.

It is to be noted that in the above-described known solution both the phase and the frequency of the carrier should by recovered. This is a disadvantage because it adversely affects the robustness of the system which is very much dependent on the carrier recovery loop as is known in the related art.

Furthermore in the conventional solutions there is a need for an oscillator in order to generate the required carrier frequency at the transmitter side, as well as a need for a specific algorithm or mechanism for carrier frequency synchronization. Also at the receiver side, the carrier frequency needs to be recovered thus requiring the associated recovery circuit. Moreover, in the conventional schemes, when the carrier frequency recovery fails, loss in synchronization occurs, thus affecting negatively the robustness of the system.

It is therefore desired that the recovery of the transmitted signal is performed without the above drawbacks and in an efficient and robust manner.

### DESCRIPTION OF THE INVENTION

The above objective is obtained by the solution proposed by the present invention. The solution proposed by the present invention is based on a carrier whose frequency is generated at the transmitter side from the clock frequency, that is the frequency of the sequence of base-band digital symbols.

Specifically, the carrier frequency is obtained as p/q times the clock frequency, p and q being two integers. It is known to a person skilled in the related art that when the ratio p/q is integer the modulated signal is D.C. free. At the receiver side the D.C. portion of the signal is filtered by a high-pass filter or by a band-pass filter, thus eliminating the interference without distorting the information bearing signal.

After the above mentioned filter, the clock is synchronized by a conventional clock recovery algorithm, and the carrier frequency is obtained by multiplying the clock frequency by p/q.

It is to be noted that in the receiver scheme proposed by the present invention, the carrier frequency is obtained from the clock recovery algorithm, and there is no need of a specific algorithm or mechanism devoted to carrier frequency synchronization.

This is of great help in systems such as FSO, where the transmitted signal can be encoded by powerful error-correcting codes with low rate, e.g., 1/2, 1/3.

In this case, if synchronization of carrier and clock is achieved, the error correcting code allows for a large coding gain, with respect to uncoded modulation, at a BER in a range between 10⁻³ and 10⁻¹². However the quality of carrier synchronization, in the conventional technique depends on the BER of the uncoded signal which is in range of for example 10⁻³. This rate turns out to be too high for providing a satisfactory carrier synchronization.

Conversely, the performance of the clock recovery algorithm is less influenced by the BER of the uncoded signal in comparison to the carrier recovery algorithm, making possible robust synchronization also at high BER of the uncoded signal.

Furthermore the overall scheme proposed by the present invention turns out to be less costly than the conventional ones because the above-mentioned free running oscillator that generates the carrier frequency at the transmit side is not used and therefore it can be eliminated, and also any carrier frequency recovery circuit at the receiver side is eliminated as well.

Moreover, the scheme proposed by the present invention is more robust than the conventional ones, because in the conventional schemes synchronization loss occurs when the carrier frequency recovery fails whereas in the solution proposed by the present invention there is no room for such failure as the recovery is performed on the clock signal.

Accordingly an object of the present invention is that of providing a method for frequency synchronization in an optical telecommunication system having a transmitter part comprising a modulator for modulating an information bearing signal, the method being characterized by comprising the step of generating a carrier signal by said modulator, the frequency of said carrier signal being derived from a clock frequency of the information bearing signal itself, or a multiple thereof.

According to an aspect of the invention, said optical telecommunication system has a receiver part for receiving an information bearing signal, wherein a received information bearing signal is demodulated by a demodulator by multiplying it by a carrier signal, the frequency of which is derived from the clock frequency of the information bearing signal recovered at the demodulator itself or a multiple thereof.

Another object of the present invention is that of providing a system for frequency synchronization in an optical telecommunication system having a transmitter part for transmitting an information bearing signal, the system being characterized by comprising a modulator at said transmitter part adapted for generating a carrier signal for modulating said information bearing signal, the frequency of said carrier signal being derived from a clock frequency of the information bearing signal itself, or a multiple thereof.

According to another aspect of the invention, said system for frequency synchronization has a receiver part adapted for receiving an information bearing signal, and hading a demodulator adapted for demodulating said information bearing signal by multiplying it by a carrier signal, the frequency of the carrier signal being derived from the clock frequency of the information bearing signal recovered at the demodulator itself or a multiple thereof

According to yet another aspect of the invention, the frequency of the carrier signal in said modulator is p/q times the frequency of the information bearing signal, p and q.

According to still another aspect of the present invention, said demodulator comprises a clock recovery circuit for recovering the frequency of the information bearing signal.

According to still a further aspect of the invention, said demodulator is characterized in that the frequency of the carrier used for demodulation is p/q times the frequency recovered by the clock recovery circuit, p and q being integers.

According to yet another aspect of the invention, said optical telecommunication system is a free space optics telecommunication system.

These and further objects and advantages are obtained by the solution proposed herein by the present invention as set forth in the present description and claims. All the claims are to be considered as an integral part of the present description.

The present invention will be better understood by way of the following detailed description of an embodiment thereof, given by way of non-limiting example, with the help of the accompanying drawings wherein:
Fig. 1 is a schematic block diagram of a modulator circuit according to a preferred embodiment of the present invention.
Fig. 2 is a schematic block diagram of a demodulator circuit according to a preferred embodiment of the present invention.

### EXAMPLE OF A PREFERRED EMBODIMENT

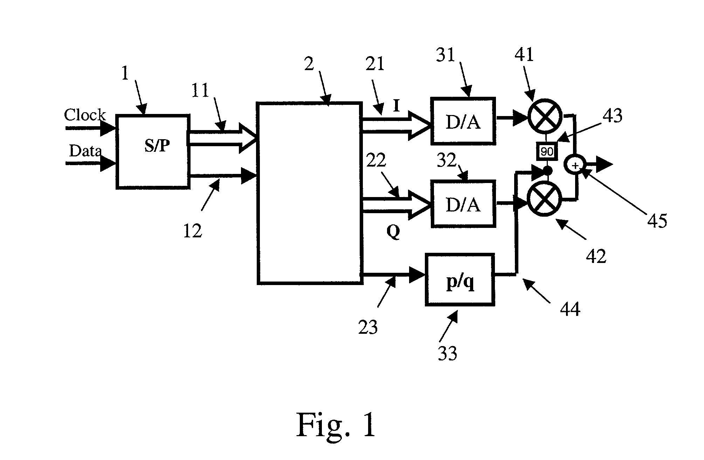

Figure 1 schematically represents an exemplifying modulator for an FSO system according to the present invention. As shown in said figure, data symbols and the clock waveform are input into a serial/parallel converter unit 1, the output of which comprises a data part 11 and a clock part 12, the frequency of the latter being the original clock frequency divided by n, where n is the number of parallel outputs of the serial/parallel converter unit 1. Both the data 11 and clock 12 signals are input into a mapping unit 2 that may preferably comprise an error correcting code, and also capable of performing differential encoding, the unit being in charge of outputting sequences of digital base band symbols 21 and 22 to be provided to the D/A converters 31 and 32 respectively.

In the present example the type of modulation used for the sake of description is based on the known phase-shift keying (PSK) modulation. Nevertheless it is to be understood that other known methods of the modulation such as for example quadrature amplitude modulation QAM or more generally amplitude/phase modulation (AM/PM) may be equally employed and are to be considered to fall within the scope of the present invention.

Thus in figure 1, the sequence of digital base-band symbols 21, 22 are represented by the pair I and Q. The repetition interval of said base band symbol 21 and 22 is the period of the clock waveform 23, the frequency of the clock symbol at the output 23 of the mapping unit 2 could be equal or a multiple of the clock frequency at the output 12 of the serial/parallel converter depending on whether or not correction has been performed in the mapping unit 2 and if so the rate of such correction.

The sequence of digital base-band symbols 21, 22 is optionally encoded by error correction codes such as convolutional codes, block codes, or a combination of them in a coded modulation scheme, all such encoding schemes being known to those skilled in the art. The sequence of digital base-band symbols 21, 22 are accompanied by a clock waveform 23 also output from the mapping and differential encoder 2. It is to be noted that the frequency of the clock waveform 23 is equal to the frequency of the digital base-band symbols 21 and 22.

Next, the base-band sequences 21, 22 are input into respective digital to analog converters 31 and 32 and modulated by a conventional phase/quadrature modulator, the latter comprising two mixers 41 and 42 and a phase shifter 43 of 90° as drawn in figure1.

The carrier signal 44 used for the modulation of the is obtained from the multiplication of the clock frequency 23 by a factor p/q, where p and q are two integers. It is known by persons skilled in the related art that that when the ratio p/q is an integer the signal to the front-end is substantially D.C. free. Typical values for the ratio p/q are p/q=1, p/q=2.

The modulated signals output from mixers 41 and 42 are added together at adder 45 for further stages of processing and transmission.

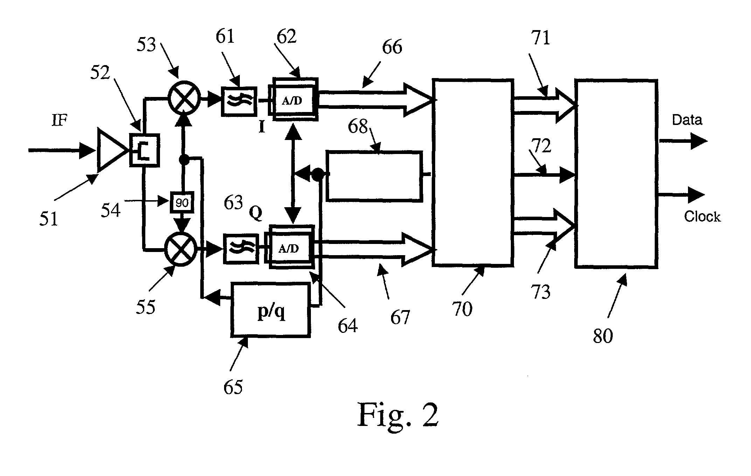

Referring now to figure 2, there is shown a schematic example of a block diagram of a demodulator according to the invention. Here again for the sake of exemplification phase-shift keying modulation is discussed, notwithstanding the fact that other known modulation methods such as QAM or AM/PM may be equally used and are to be considered to fall within the scope of the present invention.

According to the embodiment of figure 2, the signal received with intermediate frequency IF, is received at a receiving port 51 and demodulated by the conventional phase/quadrature demodulator comprising a splitter 52, a pair of mixers 53 and 55 at each branch of the splitter output and a phase shifter 54 of 90°.

According to the invention, the carrier waveform used for demodulation of the incoming signal is obtained from the multiplier block 65. Said block 65 receives at an input thereof, the clock waveform from the clock recovery block 68 and produces at its output a sinusoidal waveform the frequency of which is a multiple of the input frequency. In the present example, the multiplication factor is p/q as described above in relation to the modulator unit.

Alternatively, it may occur that the clock signal is recovered at half period (T/2), in such case the carrier frequency has to be multiplied by the factor p/2q.

The procedure of clock signal recovery performed by the clock recovery block 68 could be based on any known method. A preferred and non-limiting example of a clock recovery method is the so-called Gardner algorithm.

Thus the waveform generated at the output of the multiplier block 65 is fed to a conventional demodulator, for example a QAM, for demodulating the received signal. As shown in the example of figure 2 the signal provided by the multiplier block 65 is fed to both mixers 53 and 55 (to the latter through a phase shifter 54).

From this point on, further steps of the recovery procedure are performed according to known method. In the example of figure 2, the demodulated I and Q components of the incoming signal are filtered by low pass filters 61 and 63 and passed through analog to digital converters 62 and 64 respectively. A phase carrier recovery block 70 is then used to recover the phase of the carrier signal. The recovered phases of the carrier 71 and 73 as well as the recovered clock 72 are then passed through stages of demapping, decoding and conversion from parallel to serial, all the latter stages being represented in the figure by the block 80 at the output of which the data and the clock signals are provided.

There have thus been shown and described a novel solution for carrier frequency recovery which fulfills the objects and advantages sought therefor.

## Claims

1. A method for frequency synchronization in an optical telecommunication system having a transmitter part comprising a modulator for modulating an information bearing signal, the method being **characterized by** comprising the step of generating a carrier signal (44) by said modulator, the frequency of said carrier signal being derived from a clock frequency (23) of the information bearing signal itself, or a multiple thereof.

2. The method of claim 1 wherein said optical telecommunication system has a receiver part for receiving an information bearing signal, wherein a received information bearing signal is demodulated by a demodulator by multiplying it by a carrier signal, the frequency of which is derived from the clock frequency of the information bearing signal recovered at the demodulator itself or a multiple thereof.

3. The method according to any one of the previous claims, wherein the frequency of the carrier signal in said modulator is p/q times the frequency of the information bearing signal, p and q being integers.

4. The method according to any one of the previous claims, wherein said demodulator comprises a clock recovery circuit for recovering the frequency of the information bearing signal.

5. The method of claim 4, wherein said demodulator is **characterized in that** the frequency of the carrier used for demodulation is p/q times the frequency recovered by the clock recovery circuit, p and q being integers.

6. A system for frequency synchronization in an optical telecommunication system having a transmitter part for transmitting an information bearing signal, the system being **characterized by** comprising a modulator at said transmitter part adapted for generating a carrier signal (44) for modulating said information bearing signal, the frequency of said carrier signal being derived from a clock frequency (23) of the information bearing signal itself, or a multiple thereof.

7. The system for frequency synchronization of claim 6 wherein said system has a receiver part adapted for receiving an information bearing signal, and having a demodulator adapted for demodulating said information bearing signal by multiplying it by a carrier signal, the frequency of the carrier signal being derived from the clock frequency of the information bearing signal recovered at the demodulator itself or a multiple thereof.

8. A system according to claim 6, wherein said optical telecommunication system is a free space optics telecommunication system.

9. A modulator for use in the method of claim 1 or the system of claim 6.

10. A demodulator for use in the method of claim 2 or the system of claim 7.
